(19) Europäisches Patentamt

European Patent Office

Office européen des brevets

(11) Veröffentlichungsnummer: **0 141 952**
**B1**

(12) **EUROPÄISCHE PATENTSCHRIFT**

(45) Veröffentlichungstag der Patentschrift:
12.08.87

(21) Anmeldenummer: **84110545.5**

(22) Anmeldetag: **05.09.84**

(51) Int. Cl.⁴: **B 60 K 17/04,** F 16 H 47/02,
B 65 F 3/00

(54) Hydrostatisch-mechanische Getriebeanordnung.

(30) Priorität: **15.09.83 PCT/LU83/00244**

(43) Veröffentlichungstag der Anmeldung:
**22.05.85 Patentblatt 85/21**

(45) Bekanntmachung des Hinweises auf die Patenterteilung:
**12.08.87 Patentblatt 87/33**

(84) Benannte Vertragsstaaten:
**AT CH DE FR GB IT LI**

(56) Entgegenhaltungen:
**EP-A-0 013 425**
**EP-A-0 059 055**
**EP-A-0 063 177**
**DE-A-2 719 823**
**DE-A-2 808 437**
**DE-A-3 224 968**
**DE-B-2 656 474**
**DE-U-8 219 126**
**FR-A-2 381 218**
**US-A-4 132 132**
**US-A-4 271 723**

(73) Patentinhaber: **ZAHNRADFABRIK FRIEDRICHSHAFEN AKTIENGESELLSCHAFT,
Löwentaler Strasse 100 Postfach 2520, D-7990
Friedrichshafen 1 (DE)**

(72) Erfinder: **Ehrlinger, Friedrich, Karl- Weiss- Strasse
15, D-7990 Friedrichshafen (DE)**
Erfinder: **Mann, Egon, Alamannenweg 11, D-7990
Friedrichshafen (DE)**

(74) Vertreter: **Raue, Reimund, Zahnradfabrik
Friedrichshafen AG Löwentaler Strasse 100
Postfach 2520, D-7990 Friedrichshafen 1 (DE)**

## Beschreibung

Die Erfindung betrifft eine hydrostatisch-mechanische Getriebeanordnung für Nutzkraftfahrzeuge nach dem Oberbegriff von Anspruch 1.

Eine derartige Getriebeanordnung ist z. B. aus der DE U 82 19 126.3 bekannt, die ein mit der Antriebsmaschine gekoppeltes Schaltgetriebe zeigt, an welches ein sogenanntes Umschaltgetriebe angeflanscht ist. Bei Normalfahrt mit dem Schaltgetriebe ist eine Eingangswelle des Umschaltgetriebes unmittelbar mit einer Ausgangswelle zum Achsantrieb verbunden. Bei Kriechgangfahrt treibt eine mit der Eingangswelle kuppelbare Welle über eine Verstellpumpe einen Hydromotor an. Der Hydromotor wiederum gibt seine Antriebskraft über einen mit der Eingangswelle kuppelbaren Radsatz an die Hinterachse ab. Die zuschaltbare Welle des Umschaltgetriebes treibt über einen weiteren Radsatz eine Nebenabtriebswelle für den Antrieb von Anbaugeräten an. Dieser Getriebeaufbau bietet nur einen eingeschränkten Nutzungsbereich bei hydrostatischer Kriechgangfahrt.

Eine weitere Kriechgang-Antriebsanordnung nach der DE B 26 56 474 eignet sich wegen ihrer aufgelösten Bauweise besonders für die Umrüstung von Serien-Lastkraftwagen in einen Geräteträger, z. B. für die Schneeräumung. In dieser Anordnung treibt der Fahrzeugmotor über ein Umschaltgetriebe das Schaltgetriebe an. Bei normaler Straßenfahrt ist über das Umschaltgetriebe ein direkter Durchtrieb von einer Eingangswelle zu einer zum Schaltgetriebe führenden Ausgangswelle hergestellt. Bei Kriechgangfahrt dagegen ist die Eingangswelle mit der Antriebswelle einer Hydraulikpumpe verbunden, die einen Hydromotor antreibt. Der Hydromotor steht wiederum über einen Radsatz und die Ausgangswelle mit dem Schaltgetriebe in Verbindung. Durch den Einbau des Umschaltgetriebes zwischen dem Motor und dem Schaltgetriebe ist es zwar möglich, jeden Gang des Schaltgetriebes über das Hydrostatgetriebe anzutreiben, jedoch mit einer erheblichen Erschwernis beim Aufwärtsschalten: Der Fahrer muß das Fahrzeug bei jedem Umschaltvorgang auf die Fahrgeschwindigkeit Null abbremsen, da die von den Hinterrädern her angetriebenen Massensysteme (Hinterachse, Gelenkwellen, Schaltgetriebe) nicht an die Massen des bereits abgebremsten hydrostatischen Antriebsstranges anschließbar sind. Jedes Aufwärtsschalten macht daher eine kurze Fahrtunterbrechung erforderlich. Da angestrebt wird, möglichst kleine hydrostatische Baueinheiten zu verwenden, findet in der Praxis ohnehin nur die erste Schaltstufe Anwendung, um noch eine voll ausreichende Zugkraft im Kriechgangbetrieb zu erhalten.

Die Aufgabe der Erfindung besteht darin, den durch den stufenlosen Zusatzantrieb vorhandenen Betriebsbereich (Kriechgangfahrt) zu erweitern, ohne den Fahrer durch zusätzlichen Bedienungsaufwand zu belasten.

Diese Aufgabe ist durch die Merkmale des Anspruchs 1 gelöst.

Nach der Erfindung ist als Zusatzantrieb ein Zwischengetriebe mit einem mehrgängigen automatisch schaltbaren Lastschaltgetriebe vorgesehen. Dies hat den Vorteil, daß kleine Hydroaggregate verwendet werden könne. Dadurch, daß die Hydropumpe eine Verstellpumpe ist kann durch deren Regelung eine sehr gute Leistungsausnutzung für den Fahrantrieb und den Nebenabtrieb geboten werden. Es ist hierbei vorteilhaft, die Verstellpumpe durch eine drehzahl- und lastabhängige Steuerung zu regeln. Der Zusatzantrieb wirkt auf eine ständig an die Getriebeausgangswelle angeschlossene Zwischengetriebeausgangswelle, so daß zusätzliche Antriebselemente entfallen. Die Umschaltung auf den hydrostatischen Kriechgangantrieb erfolgt dabei in der Neutralstellung des Schaltgetriebes, so daß die Getriebeausgangswelle frei rotieren kann. Durch eine mechanische, hydraulische oder elektrische Sperre ist dabei gesichert, daß das Zwischengetriebe nur in der Neutralstellung des Schaltgetriebes einschaltbar ist.

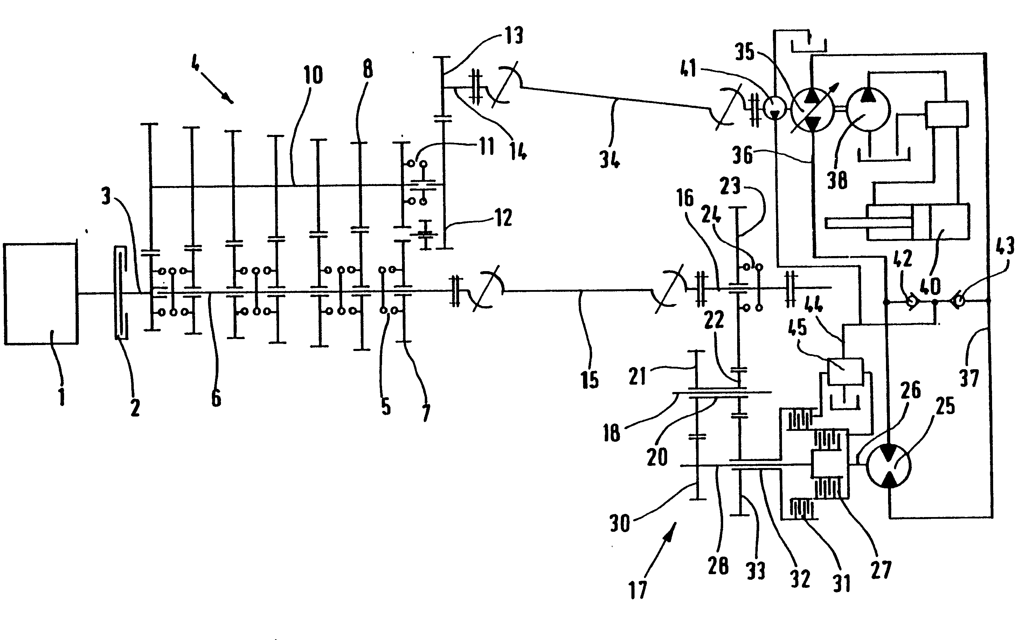

Weitere Einzelheiten und Vorteile der Erfindung sind nachfolgend anhand der Zeichnung näher erläutert.

Eine Antriebsmaschine 1 treibt über eine Hauptkupplung 2 und eine Getriebeeingangswelle 3 z. B. ein 6-gängiges Schaltgetriebe 4 in der üblichen Vorgelegebauart an. Sämtliche Gangschaltkupplungen z. B. 5 sind auf einer Getriebeausgangswelle 6 drehfest aber verschieblich angeordnet und können die Losräder z. B. 7 mit der Ausgangswelle 6 kuppeln. Die Losräder stehen mit Feströdern z. B. 8 auf einer Vorgelegewelle 10 in Eingriff. Die Wirkungsweise eines derartigen Schaltgetriebes ist allgemein bekannt. Die Vorgelegewelle 10 kann über ein durch eine Kupplung 11 einschaltbares Zahnräderpaar 12, 13 mit einer Nebenabtriebswelle 14 verbunden werden.

Die Ausgangswelle 6 ist durch eine Gelenkwelle 15 an eine Ausgangswelle 16 eines Zwischengetriebes 17 angeschlossen. Die Ausgangswelle 16 führt zu einem nicht dargestellten Achsantrieb. Das Zwischengetriebe 17 enthält außerdem eine Zwischenwelle 18 die zwei auf einer Hohlwelle 20 befestigte Zahnräder 21, 22 trägt. Das Rad 22 kämmt mit einem Losrad 23 auf der Zwischengetriebeausgansweile 16. Das Losrad 23 ist durch eine Kupplung 24 mit der Zwischengetriebeausgangswelle 16 kuppelbar. Eine von einem Hydromotor 25 antreibbare Zwischengetriebeeingangswelle 26 ist durch eine Reibkupplung 27 mit einer Welle 28 kuppelbar, auf der ein mit dem Rad 21 kämmendes Zahnrad 30 befestigt ist. Des weiteren ist die Zwischengetriebeeingangswelle 26 über eine weitere Reibkupplung 31 mit einem auf einer Hohlwelle 32 befestigten Zahnrad 33 kuppelbar. Dieses Rad 33 kämmt mit dem Zahnrad 22. Durch die Reibkupplung 27 ist somit eine kleine und durch die Reibkupplung 31 eine größere Übersetzung erzielbar.

Die Nebenabtriebswelle 14 des Schaltgetriebes 4 kann über eine Gelenkwelle 34 eine Verstellpumpe 35 antreiben, die ihrerseits über Leitungen oder Kanäle 36, 37 den auf die Zwischengetriebeeingangswelle 26 angeordneten Hydromotor 25 antreibt. Über die Nebenabtriebswelle 14 ist gleichzeitig mit der Verstellpumpe 35 eine Konstantpumpe 38 antreibbar, die z. B. Arbeitszylinder 40 eines Schneeräumgerätes mit Drucköl versorgt. Die Verstellpumpe 35 und die Konstantpumpe 38 sind dabei vorteilhaft als Tandempumpe ausgeführt. Es ist ohne weiteres auch möglich, durch die Konstantpumpe 38, anstelle des Arbeitszylinders 40, einen Hydromotor z. B. für eine Schneefräse anzutreiben.

Es ist weiter vorgesehen, den Hydromotor 25 im geschlossenen Ölkreis durch die Verstellpumpe 35 anzutreiben. In diesem Falle ist zum Ausgleich von Leckölverlusten eine Füllpumpe 41 vorhanden, die über Rückschlagventile 42 und 43 in die Leitungen 36, 37 Drucköl einspeist. Dabei ist es vorteilhaft, die Füllpumpe 41 auch zur Druckölversorgung der Reibkupplungen 27, 31 mit heranzuziehen. Zu diesem Zweck ist über eine Leitung 44 und ein automatisch betätigbares Steuerventil 45 eine Verbindung zur Füllpumpe 41 hergestellt.

## Die Wirkungsweise

Normalfahrt:
Bei normaler Fahrt mit dem Schaltgetriebe 4 ist die Nebenabtriebswelle 14 durch die Kupplung 11 ausgeschaltet. Ebenso ist die Kupplung 24 des Zwischengetriebes 17 ausgerückt. Die Getriebeausgangswelle 6 treibt somit über die Zwischengetriebeausgangswelle 16 den Achsantrieb direkt an. Die Nebenabtriebswelle 14 kann bei Normalfahrt im Stand des Fahrzeugs eingeschaltet werden. Der Kriechgangantrieb muß dabei gesperrt sein.
Kriechgangfahrt:
Die Umschaltung der Kupplung 24 des Zwischengetriebes 17 auf Kriechgangantrieb kann durch eine geeignete Sperreinrichtung nur in der Neutralstellung des Schaltgetriebes 4 bei stehendem Fahrzeug vorgenommen werden. Gleichzeitig erfolgt das Umschalten der Kupplung 11, so daß die Verstellpumpe 35 arbeitet. Die Verstellpumpe 35 treibt den Hydromotor 25 an, und dieser treibt wiederum - bei geschalteter Reibkupplung 27 - über die Räder 30, 21, 22, 23 die Ausgangswelle 16 und damit den Achsantrieb mit kleiner Übersetzung an. Ist dagegen die Reibkupplung 31 eingeschaltet, so erfolgt der Antrieb über die Hohlwelle 32, die Räder 33, 22, 23 auf die Ausgangswelle 16 bzw. den zugehörigen Achsantrieb mit größerer Übersetzung. Die Getriebausgangswelle läuft dabei sozusagen "leer" mit. Die beiden Untersetzungsstufen des Zusatzgetriebes 17 sind durch die eingangs erwähnte Automatik unter Last schaltbar.

## Weitere Vorteile

Da im Hauptfahrbereich bei Normalfahrt der Kriechgangantrieb primär (Kupplung 11) und sekundär (Kupplung 24) voll abschaltbar ist, treten weder im hydrostatischen noch im mechanischen Teil des Zusatzgetriebes Wirkungsgradverluste auf.

Die Regelmöglichkeit der Verstellpumpe einerseits erlaubt ein weiches stufenloses Anfahren auch in unwegsamen Gelände. Die automatische Steuerung des Zwischengetriebes 17 andererseits sichert einen stoßfreien Schaltübergang, verbunden mit einer erheblichen Minderung der Kupplungsarbeit für den Fahrer.

Die Verwendung des erfindungsgemäßen Zusatzgetriebes 17 erhöht die Steigfähigkeit des Fahrzeugs auf nahezu 20 % und der stufenlose Fahrbereich erweitert sich bis etwa 45 km/h. Auf diese Weise wird ein vielseitig einsetzbares Antriebssystem geschaffen, mit welchen die eingangs erwähnten Bedingungen bei einfachster Bedienung optimal erfüllt werden können. Weiterhin bietet die erfindungsgemäße Antriebsanordnung mit der motorabhängig angetriebenen Verstellpumpe 35 den Vorteil, daß bei geringer Leistungsaufnahme des Fahrantriebs im Kriechgangeinsatz (Fahrt mit hohem Übersetzungsverhältnis und hoher Zugkraft), an der Konstantpumpe 38 und damit auch für die Arbeitshydraulik eine hohe Restleistung zur Verfügung steht.

## Bezugszeichen

1 Antriebsmaschine
2 Hauptkupplung
3 Getriebeeingangswelle
4 Schaltgetriebe
5 Gangschaltkupplung
6 Getriebeausgangswelle
7 Losrad
8 Festrad
9
10 Vorgelegewelle
11 Kupplung
12 Zahnrad
13 "
14 Nebenabtriebswelle
15 Gelenkwelle
16 Ausgangswelle v. 17
17 Zwischengetriebe
18 Zwischenwelle
19

20 Hohlwelle
21 Zahnrad
22 "
23 Losrad
24 Kupplung
25 Hydromotor
26 Zwischengetriebe-Eingangswelle
27 Reibkupplung
28 Welle
29
30 Zahnrad
31 Reibkupplung
32 Hohlwelle
33 Zahnrad
34 Gelenkwelle
35 Verstellpumpe
36 Leitung
37 "
38 Konstantpumpe
39
40 Arbeitszylinder
41 Füllpumpe
42 Rückschlagventil
43 "
44 Leitung
45 Steuerventil

**Patentansprüche**

1. Hydrostatisch-mechanische Getriebeanordnung für Kraftfahrzeuge mit folgenden Merkmalen:
- Eine Antriebsmaschine (1) ist mit einem Schaltgetriebe (4) gekoppelt;
- ein schaltbarer Nebenabtrieb (11, 14) treibt eine verstellbare Hydropumpe (35) an, welche hydraulisch mit einem Hydromotor (25) verbunden ist;
- der Hydromotor (25) treibt zur Erzielung eines Kriechgangantriebs über ein zuschaltbares Untersetzungsgetriebe (17) eine an das Schaltgetriebe (4) angeschlossene Ausgangswelle (16) an, die mit einem Achsantrieb verbunden ist,
gekennzeichnet durch folgende Merkmale:
- Das Untersetzungsgetriebe ist ein mehrstufiges Lastschaltgetriebe (Zwischengetriebe 17) und
- die Zuschaltung des Kriechgangantriebs ist nur in Neutralstellung des Schaltgetriebes (4) möglich.
2. Hydrostatisch-mechanische Getriebeanordnung nach Anspruch 1, dadurch gekennzeichnet, daß die Lastschaltungen des Zwischengetriebes (17) automatisch in Abhängigkeit von der Drehzahl und der Belastung des Antriebsmaschine (1) vorgenommen werden.
3. Hydrostatisch-mechanische Getriebeanordnung nach Anspruch 1, dadurch gekennzeichnet, daß eine den Ölkreis des hydrostatischen Antriebs versorgende Füllpumpe (41) an die Reibkupplungen (27, 31) des Zwischengetriebes (17) angeschlossen ist.

**Claims**

1. Hydrostatic-mechanical transmission arrangement for motor vehicles having following features:
- a prime mover (1) is connected to a selector transmission (4);
- a shiftable power take off (11,14) drives a variable hydropump (35) which is hydraulically connected to a hydromotor (25);
- the hydromotor (25) drives an output shaft (16) attached to the selector transmission (4) and connected by an axle drive, doing so via a selectable reduction gear (17) in order to operate a creeper drive and is
characterised by the following features:
- the reduction gear is a multiple-stage powershift transmission (intermediate gearbox 17) and
- the creeper gear drive can only be engaged when the selector transmission (4) is in neutral.
2. Hydrostatic-mechanical transmission arrangement according to claim 1, characterised in that the powershifting of the intermediate gearbox (17) is performed automatically, dependent on the speed and load of the prime mover (1).
3. Hydrostatic-mechanical transmission arrangement according to claim 1, characterised in that a charging pump (41) supplying the oil circuit of the hydrostatic drive is connected to the friction clutches (27, 31) of the intermediate gearbox (17).

**Revendications**

1. Dispositif de transmission hydrostatique-mécanique pour véhicules automobiles dans lequel:
- une machine motrice (1) est couplée à une boîte de vitesses (4);
- une prise de mouvement (11, 14) entraîne une pompe hydraulique à débit réglable (35), qui est raccordée hydrauliquement à un moteur hydraulique (25);
- pour un entraînement à vitesse extra-lente, le moteur hydraulique (25) entraine, au moyen d'un démultiplicateur enclenchable (17), un arbre de sortie (16) associé à la boîte de vitesses (4) et relié à un entraînement d'essieu,
caractérisé en ce que:
- le démultiplicateur est une boîte à plusieurs rapports, commandée en charge (boîte intermédiaire 17), et
- l'enclenchement de l'entraînement à vitesse extra-lente est possible uniquement en position neutre de la boîte de vitesses (4).
2. Dispositif de transmission hydrostatique-mécanique selon la revendication 1, caractérisé en ce que les commutations en charge de la boîte intermédiaire (17) sont effectuées automatiquement en fonction du regime et de la charge de la machine motrice (1).

3. Dispositif de transmission hydrostatique-mécanique selon la revendication 1, caractérisé en ce que qu'une pompe (41) d'alimentation en huile du circuit de l'entraînement hydrostatique est reliée aux embrayages à friction (27, 31) de la boîte intermédiaire (17).